# EUROPEAN PATENT APPLICATION

(11) **EP 4 299 212 A1**
(43) Date of publication of application: **03.01.2024**
(21) Application number: 23181772.7
(22) Date of filing: 27.06.2023
(51) Int. Cl.: B22F 3/105, B22F 3/15, B22F 5/10, H01M 8/0202, B22F 3/24

(54) **A METHOD FOR CREATING AN OBJECT**

(30) Priority: 27.06.2022 GB 202209378
(71) Applicant: The Manufacturing Technology Centre Limited, Coventry, West Midlands CV7 9JU (GB)
(72) Inventor: BERMENT-PARR, Iain, Coventry, CV7 9JU (GB); PARSONS, Michael, Coventry, CV7 9JU (GB); TAYLOR, Mark, Coventry, CV7 9JU (GB)
(74) Representative: Forresters IP LLP

(57) **Abstract**

A method for creating an object by consolidating a powder including the following steps:
a) providing a former member made from a soluble material soluble in a non-hazardous solvent for shaping the object;
b) surrounding a portion of the former member with the powder;
c) densifying the powder which surrounds the portion of the former member to form the object; and
d) dissolving the former member using a non-hazardous solvent to separate the object from the former member.

## Description

### FIELD

The present invention relates to a method for creating an object by consolidating a powder.

### BACKGROUND

Methods for creating objects by consolidating a powder are known. For example, net shape powder consolidation processes or methods are known. An advantage of forming objects this way is that less material is required to form a given object compared to other techniques that often require substantial subtraction of material from a starting solid object to form the same object.

In creating an object, it is necessary for the powder to be consolidated or densified into the object with minimal to no porosity being present in the object so that the object is a fully dense or solid object.

One method of creating an object by consolidating a powder involves cold isostatic pressing. In a first step cold isostatic pressing of the powder is performed to form a green object. This involves using a mould, often made from a flexible material such as rubber, in which the powder is placed and then the mould is pressed (typically by pressing the mould isostatically under a fluid) at ambient temperature to cause the powder to be compacted to form the green object. The green object is porous but has sufficient integrity that it may be handled and take on the shape imparted by the mould. In order to form the object, a second step is required to close the porous cells of the green object through diffusion bonding. This is typically achieved through the application of heat in a process known as sintering. The green object is placed in, for example, a furnace, and the heat causes the compacted material of the green object to densify under diffusion bonding and pore closure mechanisms to become a fully dense or solid object. This often causes the green object to shrink in volume as the porosity is eliminated. Deviations in the shape of the object produced compared to a desired shape can be removed through mechanical processes such as machining any such deviations using cutting / grinding tools or the like.

Another method of creating an object from powder is known as hot isostatic pressing to consolidate the powder to form the object. In this process, the powder is placed in a canister having a shape which approximates to the desired shape of the object. Heat and pressure are simultaneously applied to the canister causing the canister to shrink, whilst maintaining a constant temperature of the powder. This causes the powder to consolidate or densify through diffusion bonding to form an object having the form of the canister. The canister is then removed from the object through mechanical and/or chemical processes such as leaching. The resultant object is a fully dense or solid object with limited to zero porosity. Deviations in the shape of the object can be removed through mechanical processes such as machining. A consideration of hot isostatic pressing is that the canister must be made from materials that can withstand the high pressures and temperatures involved in hot isostatic pressing. Suitable materials include mild steel or copper. This means that forming objects having a relatively complicated geometry involves creating canisters of a corresponding complexity, often through machining or welding multiple component parts together. This increases the cost and effort involved in forming more complex objects using hot isostatic pressing, and places a limitation on the types of objects that can be produced without significant subsequent processing to introduce complex geometric features, e.g. subtractive manufacturing processes or additive manufacturing processes.

Another method of forming an object known as field assisted sintering technology (FAST) or spark plasma sintering (SPS) is similar to hot isostatic pressing in that heat and pressure are generated in, and applied to the powder in order to form the object. FAST involves placing powder inside a die that is shaped to the desired shape of the object to be formed. The die is formed of two or more elements that are electrically conductive, for example, the elements may be made from graphite. The die is compressed, e.g. through hydraulically operated presses, and an electrical current is passed through the die, causing the die and powder to be heated. This causes the powder to undergo diffusion bonding / sintering to form a fully dense object of the desired shape with minimal to zero porosity. Any deviations in the shape may be processed as described above. Similar to hot isostatic pressing, forming shapes having a relatively complex geometry is challenging in that the dies, which are made from high strength materials, must be created having the required shape. This is often costly and involves a large amount of effort.

### BRIEF DESCRIPTION OF THE INVENTION

According to an aspect of the present disclosure there is provided a method for creating an object by consolidating a powder including the following steps:
a) providing a former member made from a soluble material soluble in a non-hazardous solvent for shaping the object;
b) surrounding a portion of the former member with the powder;
c) densifying the powder which surrounds the portion of the former member to form the object; and
d) dissolving the former member using a non-hazardous solvent to separate the object from the former member.

Optionally or preferably the soluble material is a water soluble material and the non-hazardous solvent includes or consists of water.

Optionally or preferably step c) is performed by applying heat.

Optionally or preferably the densifying of the powder in step c) is performed by applying heat and pressure.

Optionally or preferably the densifying of the powder in step c) is performed using a hot isostatic pressing (HIP) process.

Optionally or preferably the HIP process includes a canister defining a space S for receiving the powder and step a) includes the former member being positioned in the space S, wherein respective surfaces of the canister and former member define a space F substantially corresponding to the desired shape of the object to be formed.

Optionally or preferably the densifying of the powder in step c) is performed using a field assisted sintering technology (FAST) process.

Optionally or preferably the FAST process includes dies defining a space S for receiving the powder and step a) includes the former member being positioned in the space S, wherein respective surfaces of one or more of the dies and the former member define a space F substantially corresponding to the desired shape of the object to be formed.

Optionally or preferably the former member has one or more formations that define complementary formations on a surface of the object.

Optionally or preferably the one or more formations include recesses which define complementary projections on the surface of the object respectively.

Optionally or preferably the one or more formations are arranged in a pattern that forms a complementary pattern on the surface of the object.

Optionally or preferably wherein:
a) includes providing a plurality of said former members and spacing the plurality of said former members apart to define a plurality of spaces F therebetween;
b) includes filling the plurality of spaces F with powder;
c) includes densifying the powder within the plurality of spaces F to form a plurality of said objects in the spaces F in the same step; and
d) includes dissolving the plurality of said former members to separate the plurality of objects from the said plurality of former members.

Optionally or preferably wherein
a) includes providing a further object and placing the further object relative to the former member(s);
b) includes surrounding a portion of the further object with the powder; and
c) includes densifying the powder so that at least a portion of the powder bonds to the further object whilst the object is formed so that the object is bonded to the further object in the same step.

Optionally or preferably wherein:
a) includes providing a plurality of further objects and placing respective ones of the plurality of further objects in respective ones of the plurality of spaces F;
b) includes filling the plurality of spaces F with powder and surrounding respective portions of the further objects with the powder;
c) includes densifying the powder so that at least a portion of the powder bonds to the respective portions of the further objects whilst the plurality of objects are formed so that respective ones of the plurality of objects are bonded to respective ones of the plurality of further objects.

Optionally or preferably the soluble material is compatible with the heat and/or pressure applied in step c) so that the former member(s) retain their integrity in step c).

Optionally or preferably the soluble material has a melting point which is higher than the temperature required for the powder to densify and/or the soluble material may withstand the pressure applied for the powder to densify so that the former member(s) retain their integrity in step c).

Optionally or preferably the soluble material is a composite material including at least one material which is soluble in a non-hazardous solvent and/or at least one material for increasing the compressive and/or tensile strength of the composite material.

Optionally or preferably the soluble material may include or consist of an ionic solid which may be a soluble salt.

Optionally or preferably the soluble material may include or consist of a halide or a halite.

Optionally or preferably the soluble material may include or consist of sodium chloride or sodium aluminate.

Optionally or preferably wherein step a) includes forming the former member through one of: an additive manufacturing process, subtractive manufacturing process or a powder consolidation process, optionally or preferably a net shape powder consolidation process.

Optionally or preferably wherein step a) includes the former member being provided as a loose soluble material which is selectively placed relative to the powder in step b) so that, in step c), the former member, formed of the loose soluble material, is densified at the same time that the powder is densified to form and shape the object.

Optionally or preferably the powder consolidation process may be a mechanical pressing process, cold-isostatic pressing (CIP) process.

Optionally or preferably where the soluble material is a salt, step a) includes forming the former member(s) by casting, or by forming a crystalline structure of the soluble material by subjecting a saturated soluble material solution to a crystallisation process, and subsequently mechanically modifying the former member(s) to have a pre-determined shape or form.

Optionally or preferably the object includes an internal channel or passage and wherein step a) includes the former member being provided to shape the internal channel or passage so that when the former member is dissolved at step d) the object includes the internal channel or passage.

Optionally or preferably wherein the internal channel or passage follows a tortuous path.

Optionally or preferably the object includes an enclosed cavity or passage formed by the former member.

Optionally or preferably the object is, or forms part of, a heat exchanger, motor casing, gearbox housing, pipe, tube or shaft.

Optionally or preferably the object(s) are bipolar plates or unipolar plates for one of hydrogen electrolysers, fuel cells or electrochemical hydrogen compressors and each object includes at least one surface including a pattern formed by the former member(s).

According to an aspect of the present disclosure there are provided one or more objects created from a powder according to the method of any preceding aspect of the present disclosure, wherein the object(s) are bipolar plates or unipolar plates, or heat exchangers, motor casings, gearbox housings, pipes, tubes or shafts, or component parts thereof..

### BRIEF DESCRIPTION OF THE FIGURES

In order that the present disclosure may be more readily understood, preferable embodiments thereof will now be described, by way of example only, with reference to the accompanying drawings, in which:
FIGURE 1 is a flow chart embodying a method according to an aspect of the present disclosure
FIGURE 2 is a plan view of an object that may be made using a method according to an aspect of the present disclosure;
FIGURE 3 is a schematic diagram of a simplified cross-section view of the object shown in figure 2;
FIGURE 4 is a schematic diagram showing certain components for use with a method in accordance with an aspect of the present disclosure;
FIGURE 5 is a schematic diagram showing the components of figure 4 in a certain configuration as part of a method in accordance with an aspect of the present disclosure;
FIGURE 6 is a schematic diagram showing certain components for use with a method in accordance with an aspect of the present disclosure;
FIGURE 7 is a schematic diagram showing the components of figure 6 in a certain configuration as part of a method in accordance with an aspect of the present disclosure;
FIGURE 8 is a schematic diagram showing the components of figure 4 in a certain configuration as part of a method in accordance with an aspect of the present disclosure;
FIGURE 9 is a schematic diagram showing the components of figure 6 in a certain configuration as part of a method in accordance with an aspect of the present disclosure;
FIGURE 10 is a schematic diagram showing certain components in a certain configuration as part of a method in accordance with an aspect of the present disclosure;
FIGURE 11 is a schematic diagram showing a certain component in a certain configuration as part of a method in accordance with an aspect of the present disclosure;
FIGURE 12 is a cross-section view of an object for use with a method in accordance with an aspect of the present disclosure;
FIGURE 13 is a schematic diagram showing two of the objects shown in figure 12 arranged relative to certain components in a certain configuration as part of a method in accordance with an aspect of the present disclosure; and
FIGURE 14 is a cross-section view shoing an object obtained by a method in accordance with an aspect of the present disclosure based on the configuration shown in FIGURE 13.

### DETAILED DESCRIPTION OF THE DISCLOSURE

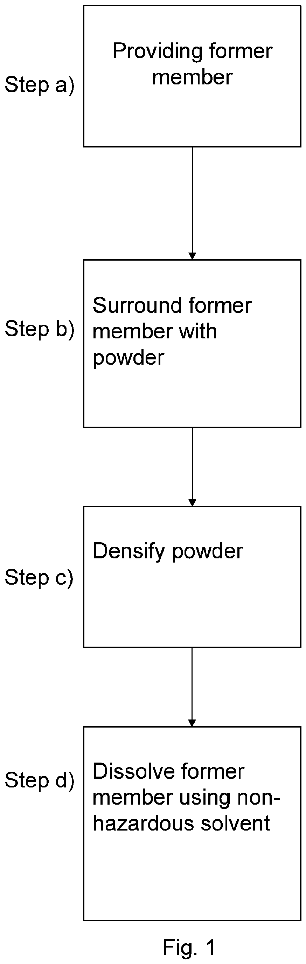

With reference to the flow chart of figure 1, this shows the steps of a method for creating an object by consolidating a powder according to an aspect of the present disclosure. Step a) includes providing a former member made from a soluble material soluble in a non-hazardous solvent, e.g. water. The former member is for shaping a portion of the object. Step b) includes surrounding a portion of the former member with the powder. Step c) includes densifying the powder which surrounds the portion of the former member to form the object. Step d) includes dissolving the former member using a solvent to separate the object from the former member, wherein the solvent is a non-hazardous solvent. Non-hazardous solvent denotes a solvent which causes minimal to no harm to the environment, people and/or other biological organisms.

In the present disclosure, the use of the terms consolidate and densify in relation to powder denote the powder being consolidated or densified into an object with minimal to no porosity being present in the object so that the object is a fully dense or solid object.

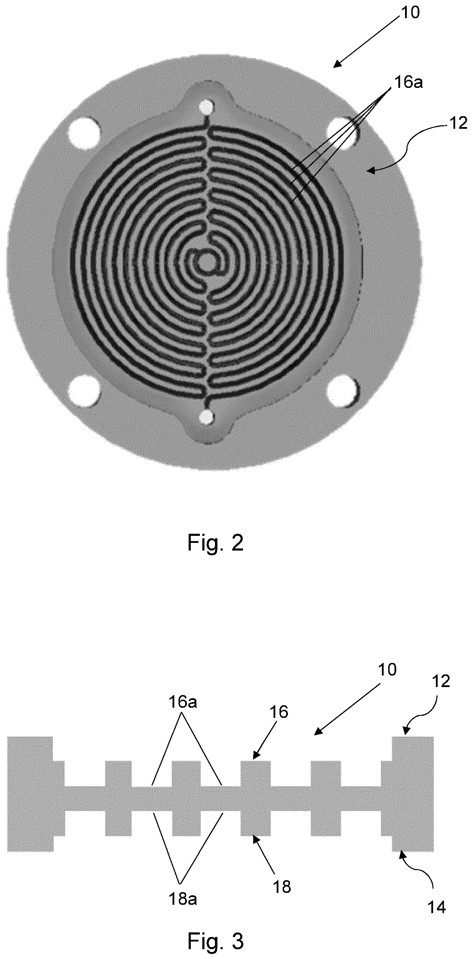

An example of the method to form a bipolar plate 10 of a hydrogen electrolyser such as that shown in figures 2 and 3 from a powder will now be described. Figure 2 is a view of the bipolar plate 10 in plan view, and figure 3 is a simplified schematic side cross-section view through the centre of the bipolar plate 10.. Bipolar plate 10 is a generally circular-shaped disc having first and second opposing surfaces 12, 14 which incorporate respective patterns 16, 18. Patterns 16, 18 include a plurality of formations 16a, 18a in the form of recesses. Pattern 16, 18 form flow channels for transporting fluid, e.g. liquid water or hydrogen gas, evenly across the bipolar plate 10 during use. The formations 16a, 18a of the patterns 16, 18 are a series of concentric semi-circular shaped recesses with each successive formation 16a, 18a having an incrementally larger diameter when moving in a direction radially away from the respective centres of the surfaces 12, 14. The bipolar plate 10 is only an example design of bipolar plate 10 that may be formed using a method according to the present disclosure. It will be appreciated that other designs of bipolar plate 10, e.g. having different shapes, patterns, and/or bipolar plates 10 for use with other types of equipment, e.g. fuel cells or electrochemical hydrogen compressors, may also be formed according to a method according to the present disclosure. For example, a unipolar plate may also be formed using a method according to the present disclosure. A unipolar plate is similar to a bipolar plate other than only one of its sides / surfaces includes flow channels rather than both of its sides / surfaces. A unipolar plate is typically placed towards the ends of a stack of bipolar plates that form the hydrogen electrolyser / fuel cell / electrochemical hydrogen compressors etc.

In the prior art, due to the highly corrosive environment, high operating temperatures and pressures within Polymer Electrolyte Membrane (PEM) water electrolysis, bipolar plates are typically made from titanium which may also be coated with corrosion resistant coatings. For these reasons, bipolar plates are generally made from widely available commercial titanium sheet or coil (e.g. Grade 2 or Grade 5). The material would typically be cast and wrought into billet prior to being rolled into sheets. The flow channels may be mechanically machined through techniques such as CNC (computer numerical control) machining, mechanical stamping or electrolytic etching. The flow channels are geometrically complex patterns and forming them according to prior art techniques requires a high degree of effort, time and cost.

The method of the present disclosure provides an alternative method of forming objects such as the bipolar plate 10, which have a relatively complex shape and/or geometric features, from a powder.

By way of example, the method will be described in relation to forming two bipolar plates from a powder in parallel as part of a single process, with each bipolar plate being identical and being configured in a similar manner to the bipolar plate 10.

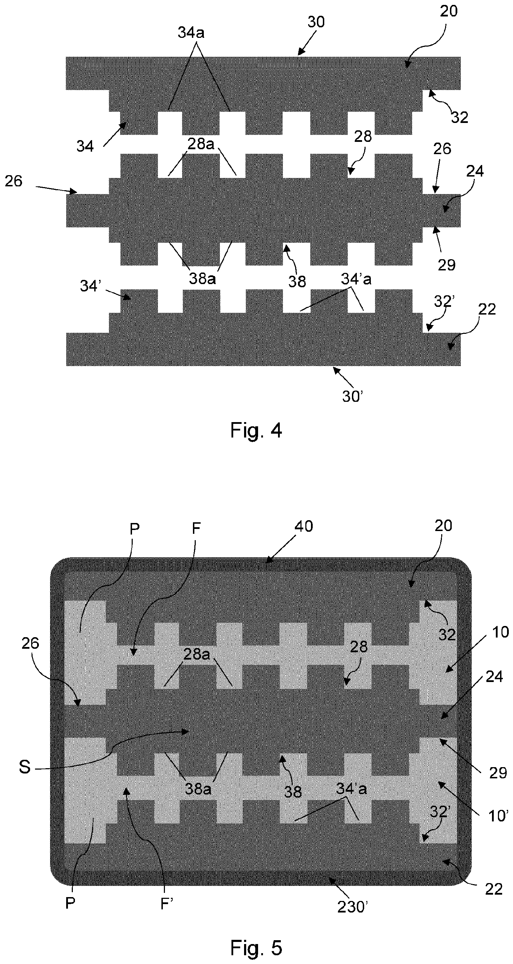

According to a first example, the method will be described with reference to figures 4 and 5.

According to this example, step a) of the method includes providing first, second and third former members 20, 22, 24. Former members 20, 22, 24 are used to shape first and second bipolar plates 10, 10' according to the present method as will be described. In particular, former members 20 and 24 are for forming first bipolar plate 10, and former members 22 and 24 are for forming the second bipolar plate 10'. First and second bipolar plates 10, 10' are identical and features in common between the plates 10, 10' share the same reference numeral with the addition of a prime symbol (') in relation to the features of second bipolar plate 10'.

In figure 4, the former members 20, 22, 24 are shown in side view cross-section across the centre of the former members 20, 22, 24.

In this example, each of the former members 20, 22, 24 are made from the same soluble material and the material is soluble in a non-hazardous solvent, e.g. water.

Different combinations of soluble materials and non-hazardous solvents that are compatible with the steps a) to d) of the method may be used.

For example, the choice of soluble material should be compatible with the process used at step c) to densify the powder and form the object. In particular, so that the former members 20, 22, 24 retain their integrity under any applied heat and/or pressure in step c). By retaining integrity it is meant that the former members 20, 22, 24 retain their original geometric shape without any significant deviations and retain their solidity. For example, the soluble material may have a melting point which is higher than the temperature required for the powder to densify and/or the soluble material may withstand the pressure applied for the powder to densify so that the former members 20, 22, 24 retain their integrity in step c).

For example, the choice of soluble material and solvent should be compatible so that the soluble material may be dissolved in the solvent without having any substantial adverse effects on the consolidated powder.

It will be appreciated that different suitable combinations of soluble materials and solvents may be used with the method of the present disclosure that are compatible with the requirements above.

Examples of soluble materials from which the former members 20, 22, 24 may be made include or consist of an ionic solid. The ionic solid may be a soluble salt.

The soluble materials may include or consist of a halide or a halite.

The soluble materials may include or consist of sodium chloride or sodium aluminate.

The solvent for dissolving the former members 20, 22, 24 may include more than one component in examples.

Former members 20, 22 are generally identical, and so only the former member 20 will be described for reasons of brevity with corresponding features of former member 22 denoted by the same integer with the addition of a prime symbol (').

With reference to figure 4, former member 20 is a generally circular disc having an outwardly facing surface 30 and an inwardly facing surface 32. The outwardly facing surface 30 is flat. The inwardly facing surface 32 includes formations 34. Formations 34 include a series of recesses 34a arranged in a pattern. As will be described, in this example, the formations 34 form a negative of the pattern 16a of the first bipolar plate 10. The recesses 34a are a series of concentric semi-circular shaped recesses with each successive recess 34a having an incrementally larger diameter when moving in a direction radially away from the centre of the surface 32.

With reference to figure 4, former member 24 is a circular disc having opposing surfaces 26, 29. Former member 24 has the same diameter as the former members 20, 22. Surface 26 includes formations 28. The formations 28 include a series of recesses 28a arranged in a pattern. The recesses 28a are located and identically shaped to the recesses 34a of former member 20 so that, when the former member 20 is placed above and aligned to the former member 24, with surface 32 facing the surface 26, the recesses 28a, 34a are aligned and congruent with one another. As will be described, the pattern formed by the formations 28 form a negative of the pattern 18a of the bipolar plate 10. Surface 29 includes formations 38. Formations 38 include a series of recesses 38a arranged in the same way as formations 28 and form a negative of the pattern 16a' of the second bipolar plate 10'. Surface 32' of the former member 22 faces towards the surface 29 during use and its formations 34' define a negative of the pattern 18a' of the second bipolar plate 10' as will be described.

According to the present disclosure, the former members 20, 22, 24 may be formed using different processes.

According to a first process, the former members 20, 22, 24 may be formed by an additive manufacturing process. In this process, an additive manufacturing machine is provided with a digital design, e.g. a 3-D CAD file, for each of the former members 20, 22, 24, and provided with the soluble material in a semi-solid or powder form which can be printed or selectively fused. Each former member 20, 22, 24 is then formed by the machine layer by layer. The machine may utilise a binder to bind powder together, e.g. a PVA binder. The skilled person would be aware of compatible binders that are compatible with the present method. The use of additive manufacturing processes permits former members 20, 22, 24 having relatively complex shapes and geometries to be made.

According to another process, the former members 20, 22, 24 may be made using a powder consolidation process. For example, a mechanical pressing process that utilises a die or stamp to press the soluble material into a desired shape could be used to form each of the former members 20, 22, 24. A cold isostatic pressing process utilising a flexible mould having the required shape and geometry may be used to form the former members 20, 22, 24. For example, where the soluble material is sodium chloride provided as salt granules, it has been found that cold isostatic pressing at 400 - 600 MPa of the salt granules in an additively manufactured flexible polymer mould forms former members 20, 22, 24 having the required geometry and shape. In examples, where the powder being consolidated is a granular salt, a small amount of water may be used as a binder during compaction. The resulting super-saturate salt solution will aid adhesion of the solid granule interfaces during compaction to form the former members 20, 22, 24. In examples, a subsequent mild temperature drying process may be employed to cause the liquid salt solution to recrystalise at the granule interfaces which will further aid densification of the former members 20, 22, 24.

The former members 20, 22, 24 may be made by casting the soluble material above its melting point. For example, the soluble material may be heated until it is molten or semi-solid and then poured into a mould having the desired shape for the molten soluble material to adopt once it has cooled to a solid state. The form of the cast object could alternatively be a regular cylindrical ingot, which would then be machined, e.g. by subtractive manufacturing techniques, to the required shape to form the former member 20, 22, 24.

In examples, where the soluble material is a cast form of salt, it may be produced as a single crystal, e.g. formed into a boule according to the Kyropoulos casting method, which may be machined to the required shape to form the former member 20, 22, 24.

According to another process, in examples where the soluble material is a soluble salt, the soluble salt may be extracted from geological formations as a naturally occurring crystalline block of material. Alternatively, a similar crystalline structure may be synthetically created by crystallisation from a saturated salt solution. In both instances the crystalline object of the soluble material is subsequently mechanically modified, e.g. by machining, to have the required shape to form the former member 20, 22, 24.

In examples, one or more of the former members 20, 22, 24 may be provided as a loose soluble material, e.g. in the form of a loose powder or soluble crystals, which is surrounded by the powder being consolidated according to the methods of the present disclosure. The soluble material consolidates into the shapes of the former members 20, 22, 24 shown in figure 4 at the same time that the powder is consolidated so that the powder is correspondingly shaped by the former members 20, 22, 24.

In this example, steps b) and c) are performed by applying heat and pressure to densify the powder using a hot isostatic pressing (HIP) process to form the first and second bipolar plates 10, 10' from powder P. The powder P is a titanium powder. For example, commercially pure titanium powder (CP-Ti) or the titanium alloy Ti-6AI-4V powder (Ti-64). A suitable soluble material for forming the former members 20, 22, 24 which is compatible with the use of these titanium powders in the present method is sodium chloride because it maintains high compressive yield strength approaching its melting point of 800°C. Titanium powders which can be consolidated below this temperature are known and are compatible with the use of sodium chloride to form the former members 20, 22, 24.

For example, commercial purity alpha titanium (CP-Ti) has been shown to be successfully consolidated in a HIP process to 98.1% density after a 90 minute dwell time at 700°C and an applied pressure of 34 MPa (see B.K Lograsso et al, "Densification of titanium powder during hot isostatic pressing", Metallurgical Transactions A, Volume 19A, 1767-1773, 1988). The present method has been performed using former members formed from sodium chloride to densify titanium powders around the former members in a HIP process at a temperature of 750°C. Although Ti-6AI-4V powder (Ti-64) is often densified or consolidated in HIP processes having a temperature of 900 - 950°C, the present inventors have found that a four hour dwell time at 750°C with an applied pressure of 35MPa is adequate for consolidating Ti-6AI-4V powder to a satisfactory degree. It has been seen that the former members 20, 22, 24 sufficiently maintain their integrity and shape in order to form the bipolar plates 10, 10' to the extent required. Other powders for which former members 20, 22, 24 made from sodium chloride may be compatible with include aluminium alloys, high purity copper and softer grades of titanium powders. Sodium aluminate may also be compatible with consolidation of a wider range of higher melting point powder materials as it has a higher melting point of 1650°C.

With reference to figure 5, step b) will be described. The HIP process involves providing a canister 40 defining a space S for receiving the powder and the former members 20, 22, 24. In this example, the canister 40 is relatively simple cylindrical shape made from a tubular section of steel with its open ends respectively closed by a circular sheet of steel welded thereto. Prior to the top of the canister 40 being sealed, step b) involves placing the former member 22 in the space S so it rests at the bottom of the canister 40 with its surface 32' facing upwards and inwardly towards the space S. The powder P is then poured into the space S to fill a pre-determined volume. The powder P surrounds the surface 32' and rests against the inwardly facing surface of the tubular section of the canister 40. Former member 24 is then placed into the space S until it rests on the powder P above the former member 22. The former member 24 is pressed into the powder P and/or the canister 40 may optionally be vibrated so that the powder P fills the respective recesses 38a of formations 38 and recesses 34a' of formations 34. The former members 22 and 24, together with the canister 40 form a space F' having a shape that corresponds to the pre-determined shape of the bipolar plates 10, 10' after densification. In this example, the space F' is for forming the second bipolar plate 10' after the HIP powder densification process is complete. Powder P is then poured onto the upwardly facing surface 26 of the former member 24. The powder P surrounds the surface 26 and is poured until it fills a pre-determined volume of the space S. Former member 20 is then placed into the space S with its surface 32 facing towards the former member 24 and powder P until it rests on the powder P above the former member 24. The former member 20 is pressed into the powder P and/or the canister 40 may optionally be vibrated so that the powder P fills the respective recesses 28a of formations 28 and recesses 34a of formations 34. The powder P now surrounds the surface 32 of the former member 20. The former members 20, 24 form a space F that is identical to space F' and the space F is filled with the powder P in a similar way to space F'. Space F is for forming the first bipolar plate 10 after the HIP powder densification process is complete.

Where one or more of the former members 20, 22, 24 are provided as loose soluble material in examples, then the powder P and the soluble material are selectively placed, e.g. by pouring or layering, in the space S to form the desired shape of the objects to be produced in the spaces F, F'. For example, the soluble material and powder P may be layered within the space S to replicate the shapes shown in figure 5 where the spaces F, F' are filled with the powder P, and the spaces occupied by the former members 20, 22, 24 are filled with the soluble material in powder form. This must be done carefully to avoid or minimise any mixing of the powder P and the soluble material at the interfaces or boundaries between them.

Step c) will now be described for densifying the powder P.

A vacuum is applied to the canister 40 to remove any air or gas, before completely sealing the canister 40. The HIP process is performed according to techniques known in the art by applying heat and pressure to the canister 40 to densify the powder P within the spaces F and F' so respective objects are formed in the spaces that are fully dense or solid with limited to zero porosity. In this case, the object formed in space F corresponds to the first bipolar plate 10 and the object in space F' corresponds to the second bipolar plate 10. During this process, the former members 20, 22, 24 will retain their shape but move with the compacting canister, and due to the heat / pressure applied, there may be some adhering of the former members 20, 22, 24 to the plates 10, 10'.

Where the former members 20, 22, 24 are provided as loose soluble material, the soluble material will consolidate or densify into solid objects at the same time as the powder P is consolidated or densified. The soluble material will hold the spaces occupied within space S whilst this occurs and thus effectively shapes the powder P into the objects being formed from the powder P in the neighbouring spaces F, F'.

In this example, for which the powder P is a titanium powder, the heat would be applied so that the canister 40 is at a temperature of around 750°C and a pressure of around 35MPa would be applied to the canister 40 to sufficiently densify the powder P. Where other powders are used, the skilled person will be aware of which temperature and pressures are required for a particular powder to densify.

After sufficient heat and pressure has been applied to densify the powder P and form the bipolar plates 10, 10', the bipolar plates 10, 10' together with the former members 20, 22, 24 adhered thereto must be removed from the canister 40. Techniques known in the art may be employed for this purpose, for example, chemically leaching the canister 40 or mechanical cutting the canister 40 away.

Step d) is now performed to separate the bipolar plates 10, 10' from the former members 20, 22, 24. This involves dissolving the former members 20, 22, 24 using a non-hazardous solvent, for example, the non-hazardous solvent may include or consist of water. For example, the bipolar plates 10, 10' with the former members 20, 22, 24 adhered thereto may be placed in a container that is flushed with the solvent causing the former members 20, 22, 24 to dissolve and thereby separate the bipolar plates 10, 10' therefrom.

The bipolar pates 10, 10' may have a residual layer of material from the former members 20, 22, 24, e.g. it may have chemically reacted with the exposed surfaces of the bipolar plates 10, 10', or the exposed surfaces of the bipolar plates 10, 10' to which the material was adhered may have a rough surface. Such residual layers or rough surfaces may be lightly polished through the use of an abrasive slurry or a lightly reactive chemical etchant through techniques known in the art.

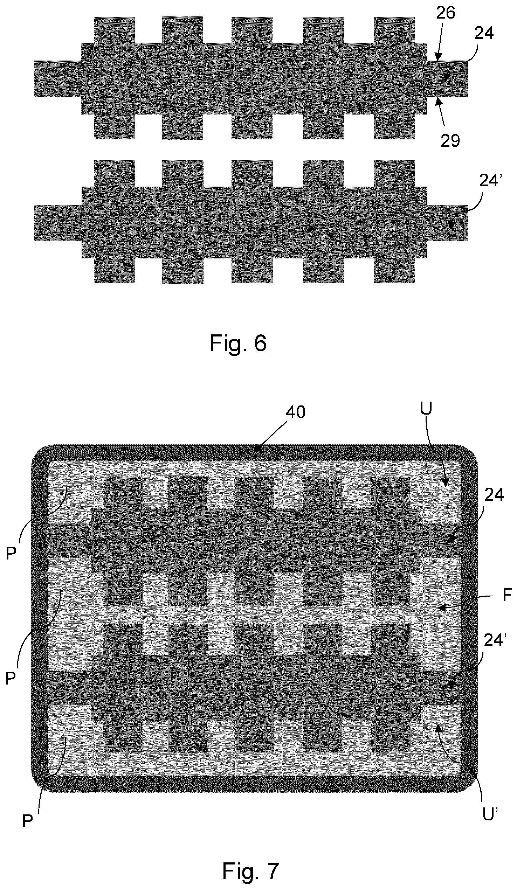

The present method may be employed to form bipolar and unipolar plates in the same process. For example, referring to figures 6 and 7, these show a different arrangement of former member 24 and an identical former member 24' that may be used in a similar way to that described above to form bipolar plates 10, as well as two identical unipolar plates. In particular, with reference to figure 7, the former members 24, 24' are configured to be placed in the canister 40 in a spaced apart arrangement to define spaces F, U, U' in which the powder P is placed. Space F corresponds to the shape of the bipolar plate 10 after the powder P has been consolidated / densified. Space F is defined by surfaces 29 and 26' of former members 24 and 24'. Spaces U, U' are identical and are for forming the unipolar plates. Space U is defined by surface 26 of former member 24 and the canister 40. Shape U' is defined by surface 29' of former member 24' and the canister 40. The unipolar plates are each identical to the bipolar plate 10 other than only one of its surfaces incorporates flow channels and the other, opposite, surface is flat. Each unipolar plate is thus identical to a half section of the bipolar plate 10 along an axis that lies in the plane of the bipolar plate 10.

An advantage of the present method is that it permits a bipolar plate to be made from comparatively rough, coarse and oxidised titanium powder relative to that typically used in titanium powder processing, e.g. within laser powder bed fusion additive manufacturing which benefits from fine and easily spreadable powders. Use of lower cost and more readily available titanium powder sources may enable the net shape powder metallurgy titanium bipolar plates described in the present method to be considered cost-competitive versus traditional manufacturing techniques. These latter techniques may consist of subtractive machining surface features into titanium sheet material, which has itself undergone many energy intensive and high value melting, forging and rolling processing steps since it was extracted as pure titanium sponge, e.g. via the Kroll method. Objects made via high temperature and pressure solid state powder densification methods on the other hand, such as HIP, produce high quality objects in one single processing step and can utilise pure titanium sponge fines as the starting powder, P. The resulting objects have very low to no porosity, fine grain size, homogeneous and anisotropic mechanical properties, and predictable defects. A relatively wide powder size range can be used and less spherical powders, recycled materials and/or lower grade waste powder streams may be utilised by the present method providing, amongst other things, environmental benefits such as a reduced carbon footprint. Another advantage is that a relatively simple geometry of canister 40 may be utilised compared to known techniques in the art that are otherwise commercially not viable to produce a bipolar plate from a powder. One or more of the described advantage(s) may similarly apply to unipolar plates made according to the method of the present disclosure.

Also, the use of soluble materials that are soluble in non-hazardous solvents, particularly water, permits a safer and more easily manageable process for dissolving the former members. Also, the use of readily available materials such as salts, e.g. sodium chloride, rock salt, table salt, halite salts, reduces the cost involved with the present method.

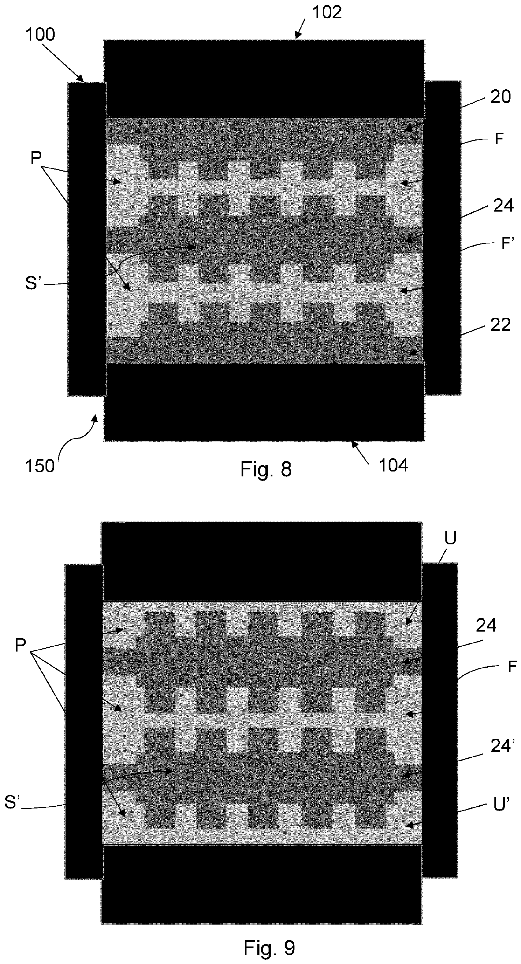

With reference to figure 8, an example of how the present method could be performed to produce the bipolar plates 10, 10' from powder P using a field assisted sintering technology process (FAST) will now be described. Former members 20, 22, 24 are used in this example, and are the same as those provided as part of step a) described in relation to the HIP process referenced in figures 4 and 5. The powder P is also a titanium powder.

The FAST apparatus will not be described in detail here as its main components are known in the art. For the purpose of this disclosure, only an assembly 150 of the FAST apparatus in which the bipolar plates 10, 10' are formed will be described.

Assembly 150 includes a tubular section 100. The tubular section 100 is open at its ends and defines a space S'. Dies 102, 104 are provided for closing the respective ends of the section 100 and closing the space S'. The dies 102, 104 are identical and generally cylindrically shaped. The dies 102, 104 and the tubular section 100 may be made from an electrically and thermally conductive material such as graphite. The dies 102, 104 are connected to a pressing means of the FAST apparatus, e.g. hydraulically operated presses, for driving movement of the dies 102, 104 linearly along the longitudinal or central axis of the tubular section 100.

Figure 8 shows a cross-section view through the assembly 150 with the dies 102, 104 in place and the space S' having been loaded with the former members 20, 22, 24. Steps a) and b) are similarly carried out as that described in relation to the canister 40 and the HIP process associated with the example shown in figures 4 and 5.

Densifying of the powder P at step c) occurs by the application of heat and pressure. Here application of heat denotes generation of heat because, different to the HIP process described previously, in this case the heat is generated by applying an electrical current to the dies 102, 104 which induces or generates high temperatures between the contacting surfaces of the powder particles via the Joule heating effect. At the same time, pressure is applied to the powder P by the dies 102, 104 being driven towards the centre of the tubular section 100. Where the powder P is CP-Ti or Ti-64, a suitable applied pressure is 35 MPa for 15 minutes once the temperature has stabilised at 750°C.

This causes the powder P to densify to form the bipolar plates 10, 10' in the spaces F, F' in a manner similar to that described in relation to the HIP process above. Densification of the powder to form the bipolar plates 10, 10' occurs relatively quickly in comparison to a HIP process. This may be advantageous in examples because higher production rates can be achieved and/or any deformations or defects due to prolonged exposure to high temperature and/or pressure are less likely to occur.

Step c) of separating the bipolar plates 10, 10' from the former members 20, 22, 24 is achieved by first removing the assembly 150 from the rest of the FAST apparatus and then separating the tubular section 100, and dies 102, 104 in accordance with techniques known in the art.

Step d) of dissolving the former members 20, 22, 24 may then be performed to separate the bipolar plates 10, 10' in a manner similar to that described in relation to the HIP process above.

As with the HIP process above, the FAST method may be employed to form bipolar and unipolar plates in the same process. As an example, figure 9 shows the same arrangement of former members 24, 24' as in figure 6 and 7, allowing the formation of one bipolar plate in space F and two identical unipolar plates in spaces U, U' as part of the FAST process in the assembly 150.

Depending on the powder, step c) of densifying the powder may be performed by only applying heat to the powder i.e. sintering, rather than also applying pressure, in order to form an object that is sufficiently dense to have minimal to no porosity. In such examples, CP-Ti powder is suitable where the former members 20, 22, 24 are formed from sodium chloride because it can be consolidated at temperatures that are lower than the melting point of sodium chloride. CP-Ti powder has been shown to be successfully consolidated under 500°C under vacuum sintering (see F. Xin et al, Effect and Evolution of Oxide Film in the HDH-Ti Powder Surface on Densification Behavior during Sintering, Metallurgical and Materials Transactions A, Vol. 53, Iss. 4, p.1164-1175, 2022). In one such example, a suitable container having the former members 20, 22, 24 and powder P arranged as shown in figure 5 may be placed directly into a vacuum furnace or other heating device to sinter the powder P at an appropriate temperature to consolidate or densify the powder P. In another example, the assembly 150 may be placed in the FAST apparatus as previously described and only heat may be applied to the powder P through the electrical current passing through the dies 102, 104 without the dies 102, 104 being driven to apply pressure to the powder P. In another example, the former members 20, 22, 24 and powder P may be joined together to form a loosely bonded intermediate object, e.g. using a binder medium, before sintering the intermediate object at high temperature to densify it into an object and remove the binder. The former members 20, 22, 24 could then be dissolved using a solvent to obtain the object formed from the consolidated powder. In one example, the intermediate object may be formed by suitably loading the former members 20, 22, 24 and powder P into a flexible mould before compacting the mould at high pressure without the application of heat, e.g. using a cold-isostatic pressing method to form an intermediate object (i.e. green object). The intermediate object may then be removed from the mould and transferred to a high temperature vacuum furnace or other appropriate heating device to undergo sintering at an appropriate temperature to complete densification. The former members 20, 22, 24 may subsequently be dissolved to leave behind the object formed by the consolidated powder P.

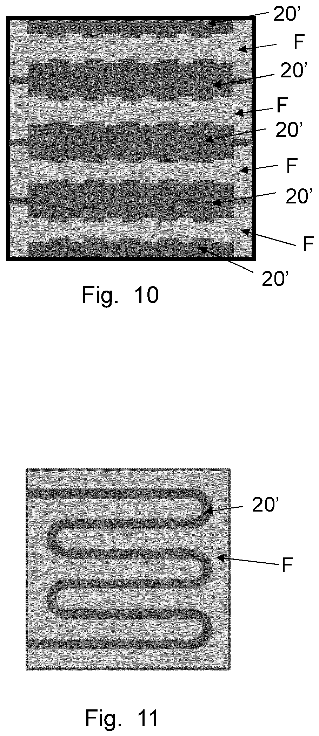

An advantage of the examples described above includes the ability to form multiple bipolar plates in parallel in a single process which reduces time and cost compared to forming them separately through separate processes. Although the method described forms a pair of bipolar plates, a larger number of bipolar plates may be formed in parallel in the same powder densification step. With reference to figure 10, this shows a plurality of former members 20' spaced apart to define a plurality of spaces F therebetween. These spaces F may be filled with powder P and the powder densified so that four bipolar plates are formed in the same step. It will be appreciated that bipolar plates could be formed in parallel and one or more of the bipolar plates may be different, e.g. the former members 20' may have suitable forms or shapes to produce the different bipolar plates.

Although the example described is in relation to forming bipolar plates, a number of different types of components or objects may be formed in accordance with a method of the present disclosure.

In examples, the described method may be used to form an object including an internal channel or passage. In such examples, the former member being provided at step a) is for shaping the internal channel or passage so that when the former member is dissolved at step d) the object includes the internal channel or passage. The internal channel or passage may follow a tortuous path. If the internal channel or passage is to have a desired shape, then the former member may be formed, e.g. using any of the previously described methods, to have a corresponding shape to the desired shape of the internal channel or passage. The powder then surrounds the former member at b) so that after steps c) and d) have been performed, the former member leaves an internal space or cavity within the object which is the internal channel or passage. In examples, the internal channel or passage may terminate in one or more openings in the peripheral surface of the object. It will be understood that the former member may be provided as a loose soluble material in a similar way to previously described for use in this method.

For example, heat exchangers having complex internal channels may be made according to the method. Figure 11 shows a former member 20' that is shaped to follow a tortuous path according to a desired path of an internal channel within a heat exchanger. A space F is formed around the former member 20' that may be filled with powder P and densified to form the heat exchanger, and the former member 20' later dissolved so that an internal channel remains having the shape defined by the former member 20'. Any component part having an enclosed cavity or passage may be formed in accordance with a method of the present disclosure. For example, motor casings, gearbox housings, pipes, tubes or shafts.

In examples in accordance with the present disclosure, the method may include the powder being bonded to a further object in the same step c) in which the powder is densified. In general terms, for this variation of the method, step a) includes providing the further object and placing the further object relative to the former member, step b) includes surrounding a portion of the further object with the powder, and step c) includes densifying the powder so that at least a portion of the powder bonds to the further object whilst the object is formed so that the object is bonded to the further object in the same step. In examples, the object effectively forms a coating that is bonded to the further object. Alternatively the object will be diffusion bonded to the further object such it becomes an integral part of the object. The further object may have different material or mechanical properties in order to enhance the function of the component during use.

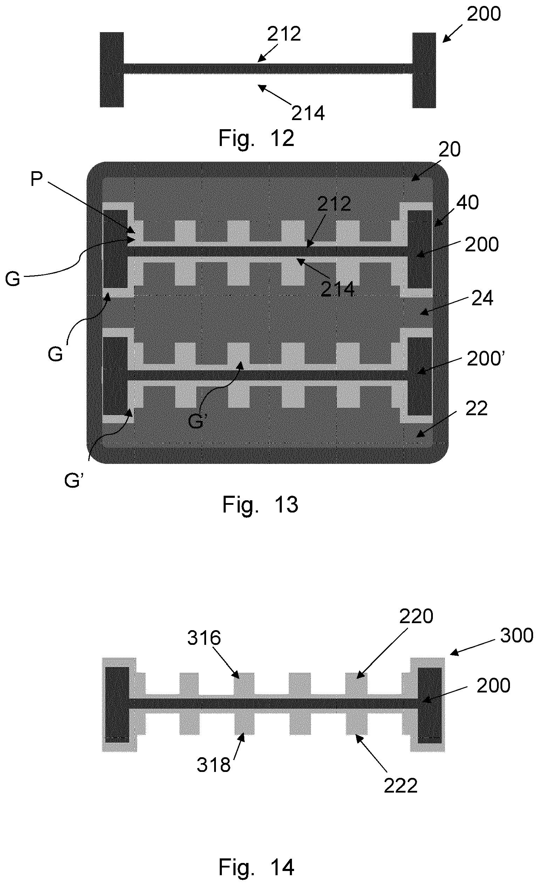

As an example, this variation may be used to form a bipolar plate such as bipolar plate 10 from a starting object 200 shown in figure 12. Object 200 is a generally circular disc having opposing surfaces 212, 214 each having a circular recess on which patterns corresponding to patterns 16, 18 are respectively bonded by densifying and bonding powder P thereto. In this example, the method involves densification of the powder in step c) being performed by a HIP process but it may also be performed by other processes such as FAST or cold pressing followed by vacuum sintering at high temperature.

Referring to figure 13, this is a cross-section view of the canister 40 having been loaded with former members 20, 22, 24 and two identical objects 200, 200', and powder P as part of steps a) and b). The former members 20, 22, 24 are identical to those shown in figure 4 described previously. The steps a) and b) are carried out in a similar manner as that described in relation to figures 4 and 5 except that the object 200 is positioned between the former members 20, 24 to define a space G between the former members 20, 24 and the object 200. Similarly, object 200' is positioned between former members 22, 24 to define a space G' between the former members 20, 24 and the object 200'. The spaces G, G' are shaped to correspond to the patterns 16, 18 respectively. Step c) is performed on the canister 40 so that the powder P is densified. However, because the powder P is also in contact with the respective surfaces of the objects 200, 200' during this step, the powder P will also bond to the objects 200, 200' at the same time that the powder P is densified in the spaces G, G' so as to form two bipolar plates identical to the bipolar plate 300 shown in figure 14. The canister 40 can then be removed and the former members 20, 22, 24 dissolved to separate the bipolar plates therefrom.

Figure 14 shows a bipolar plate 300 formed from the object 200. Bipolar plate 300 has the same shape as bipolar plate 10 but has a composite structure formed of the object 200 and parts 220, 222 formed of the densified powder bonded to respective surfaces 212, 214 of the object 200. The parts 220, 222 have outer surfaces that are shaped to form patterns 316, 318 respectively. The advantage of this method is that a readily available material, such as steel, may be used to form the object 200 and the parts 220, 222, which, during use, are the parts of the bipolar plate 300 that are exposed to the corrosive and demanding operating environment, may be formed from a higher performance material such as titanium that can withstand those environments. Thus, the overall cost of the object is reduced compared to making the entire object from titanium, for example.

It will be appreciated that different types of powder, e.g. metal, polymer or ceramic powders, depending on the type of powder densification that is applied may be used as appropriate to form an object according to the method of the present disclosure. Depending on the type of powder being used, the soluble material used to form the former members must be compatible, i.e. capable of withstanding the temperature / pressure required to densify the powder.

In examples where the densification of the powder is achieved by applying a pressure, the soluble material used to form the former members may be a composite material including at least one material which is soluble in a non-hazardous solvent, e.g. water, and at least one material for increasing the compressive and/or tensile strength of the composite material. For example, the soluble material may include a sodium chloride mixed with a ceramic material, e.g. graphite fibres, that are both strengthening, conductive, and capable of withstanding the high temperatures required to densify the powder. The mixture may be mechanically pressed together or graphite fibres may be mixed within a saturated salt solution before evaporation to form a dense solid suitable for the former members.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

## Claims

1. A method for creating an object by consolidating a powder including the following steps:
a) providing a former member made from a soluble material soluble in a non-hazardous solvent for shaping the object;
b) surrounding a portion of the former member with the powder;
c) densifying the powder which surrounds the portion of the former member to form the object; and
d) dissolving the former member using a non-hazardous solvent to separate the object from the former member.

2. A method according to claim 1 wherein the soluble material is a water soluble material and the non-hazardous solvent includes or consists of water.

3. A method according to claim 1 or 2 wherein step c) is performed by applying heat, or wherein the densifying of the powder in step c) is performed by applying heat and pressure.

4. A method according to claim 1, 2 or 3, wherein the densifying of the powder in step c) is performed using a hot isostatic pressing (HIP) process, optionally or preferably the HIP process includes a canister defining a space S for receiving the powder and step a) includes the former member being positioned in the space S, wherein respective surfaces of the canister and former member define a space F substantially corresponding to the desired shape of the object to be formed.

5. A method according to claim 1, 2 or 3 wherein the densifying of the powder in step c) is performed using a field assisted sintering technology (FAST) process, optionally or preferably the FAST process includes dies defining a space S for receiving the powder and step a) includes the former member being positioned in the space S, wherein respective surfaces of one or more of the dies and the former member define a space F substantially corresponding to the desired shape of the object to be formed.

6. A method according to any preceding claim wherein the former member has one or more formations that define complementary formations on a surface of the object, optionally or preferably the one or more formations include recesses which define complementary projections on the surface of the object respectively and/or wherein the one or more formations are arranged in a pattern that forms a complementary pattern on the surface of the object.

7. A method according to any preceding claim wherein:
a) includes providing a plurality of said former members and spacing the plurality of said former members apart to define a plurality of spaces F therebetween;
b) includes filling the plurality of spaces F with powder;
c) includes densifying the powder within the plurality of spaces F to form a plurality of said objects in the spaces F in the same step; and
d) includes dissolving the plurality of said former members to separate the plurality of objects from the said plurality of former members.

8. A method according to any one of claims 1 to 7 wherein:
a) includes providing a further object and placing the further object relative to the former member(s);
b) includes surrounding a portion of the further object with the powder; and
c) includes densifying the powder so that at least a portion of the powder bonds to the further object whilst the object is formed so that the object is bonded to the further object in the same step.

9. A method according to claim 7 wherein:
a) includes providing a plurality of further objects and placing respective ones of the plurality of further objects in respective ones of the plurality of spaces F;
b) includes filling the plurality of spaces F with powder and surrounding respective portions of the further objects with the powder;
c) includes densifying the powder so that at least a portion of the powder bonds to the respective portions of the further objects whilst the plurality of objects are formed so that respective ones of the plurality of objects are bonded to respective ones of the plurality of further objects.

10. A method according to any preceding claim wherein:
the soluble material is compatible with the heat and/or pressure applied in step c) so that the former member(s) retain their integrity in step c), optionally or preferably wherein the soluble material has a melting point which is higher than the temperature required for the powder to densify and/or the soluble material may withstand the pressure applied for the powder to densify so that the former member(s) retain their integrity in step c); and/or
the soluble material is a composite material including at least one material which is soluble in a non-hazardous solvent and/or at least one material for increasing the compressive and/or tensile strength of the composite material.

11. A method according to any preceding claim wherein the soluble material:
a) includes or consists of an ionic solid which may be a soluble salt;
b) includes or consists of a halide or a halite;
c) includes or consists of sodium chloride or sodium aluminate.

12. A method according to any preceding claim wherein:
step a) includes forming the former member through one of: an additive manufacturing process, subtractive manufacturing process or a powder consolidation process, optionally or preferably a net shape powder consolidation process, optionally or preferably wherein the powder consolidation process may be a mechanical pressing process, cold-isostatic pressing (CIP) process; or
wherein step a) includes the former member being provided as a loose soluble material which is selectively placed relative to the powder in step b) so that, in step c), the former member, formed of the loose soluble material, is densified at the same time that the powder is densified to form and shape the object.

13. A method according to any one of claims 1 to 11, wherein where the soluble material is a salt, step a) includes forming the former member(s) by casting, or by forming a crystalline structure of the soluble material by subjecting a saturated soluble material solution to a crystallisation process, and subsequently mechanically modifying the former member(s) to have a pre-determined shape or form.

14. A method according to any preceding claim wherein:
the object includes an internal channel or passage and wherein step a) includes the former member being provided to shape the internal channel or passage so that when the former member is dissolved at step d) the object includes the internal channel or passage, optionally or preferably wherein the internal channel or passage follows a tortuous path; and/or
the object includes an enclosed cavity or passage formed by the former member, optionally or preferably wherein the object is, or forms part of, a heat exchanger, motor casing, gearbox housing, pipe, tube or shaft; and/or
the object(s) are bipolar plates or unipolar plates for one of hydrogen electrolysers, fuel cells or electrochemical hydrogen compressors and each object includes at least one surface including a pattern formed by the former member(s).

15. One or more objects created from a powder according to the method of any preceding claim, wherein the object(s) are bipolar plates, unipolar plates, heat exchangers, motor casings, gearbox housings, pipes, tubes or shafts, or component parts thereof.
